Europäisches Patentamt

European Patent Office

Office européen des brevets

(11) Veröffentlichungsnummer: **0 140 409**
**B1**

(19)

(12) # EUROPÄISCHE PATENTSCHRIFT

(45) Veröffentlichungstag der Patentschrift:
**23.11.88**

(51) Int. Cl.⁴: **C 04 B 35/26,** C 01 G 49/00

(21) Anmeldenummer: **84201293.2**

(22) Anmeldetag: **10.09.84**

(54) **Magnetkern auf der Basis von Lithium-Zink-Mangan-Ferrit.**

(30) Priorität: **12.09.83 NL 8303144**
**06.07.84 NL 8402146**

(43) Veröffentlichungstag der Anmeldung:
**08.05.85 Patentblatt 85/19**

(45) Bekanntmachung des Hinweises auf die Patenterteilung:
**23.11.88 Patentblatt 88/47**

(84) Benannte Vertragsstaaten:
**DE FR GB NL**

(56) Entgegenhaltungen:
DE-A-2 022 027
FR-A-2 291 594
GB-A-2 019 828
US-A-2 986 523

CHEMICAL ABSTRACTS, Band 85, Nr. 18,
November 1976, Seite 907, Nr. 136292j, Columbus,
Ohio, USA
PATENTS ABSTRACTS OF JAPAN, Band 4, Nr. 63(E-
10)(545), 13. Mai 1980, Seite 152E10

(73) Patentinhaber: **N.V. Philips' Gloeilampenfabrieken,**
**Groenewoudseweg 1, NL- 5621 BA Eindhoven (NL)**

(72) Erfinder: **Koppens, Leonardus Josephus, INT.**
**OCTROOIBUREAU B.V. Prof. Holstlaan 6, NL-**
**5656 AA Eindhoven (NL)**
Erfinder: **Henket, Bernardus Hubertus J., INT.**
**OCTROOIBUREAU B.V. Prof. Holstlaan 6, NL-**
**5656 AA Eindhoven (NL)**
Erfinder: **Esveldt, Cornelis Jacobus, INT.**
**OCTROOIBUREAU B.V. Prof. Holstlaan 6, NL-**
**5656 AA Eindhoven (NL)**

(74) Vertreter: **Koppen, Jan, INTERNATIONAAL**
**OCTROOIBUREAU B.V. Prof. Holstlaan 6, NL-**
**5656 AA Eindhoven (NL)**

## Beschreibung

Die Erfindung betrifft einen Magnetkern aus oxidischem Ferromagnetmaterial, der aus einem Spinellferrit mit kubischer Kristallstruktur besteht mit einem spezifischen elektrischen Widerstand $\rho$ höher als $10^5$ Ohm.m zur Verwendung mit MHx Frequenzbereich.

Magnetkerne aus oxidischem Ferromagnetmaterial aus einem Spinellferrit mit kubischer Kristallstruktur werden z. B. in grossen Mengen in Induktionsspulen und Transformatoren im Bereich der Telekommunikation und der industriellen und Konsumentenelektronik verwendet. Abhängig von der Verwendung können diese Materialien in vier Arten unterteilt werden:

- Die erste Art ist ein Ferrit mit niedrigen Verlusten für Spulen hoher Qualität, die in Filtern verwendet werden. Die Magnetkerne sind meistens runde und viereckige Topfkerne.

- Die zweite Art hat eine hohe magnetische Anfangspermeabilität und dient für Niederleistungsbreitband- und Impulstransformatoren. Die Magnetkerne sind meistens Torroide, E-Kerne und verschiedene Topfkernarten.

- Die dritte Art eignet sich für Hochleistungsanwendungen wie z. B. in Leistungstransformatoren, die im Frequenz bereich von 10 bis 100 kHz arbeiten. Der Bereich der verarbeiteten Leistungen liegt typischerweise im Bereich von 10 bis 750 W. Die Magnetkerne sind meistens U-Kerne oder E-Kerne.

- Die vierte Art dient zur Verwendung in Magnetkerne für Hochqualitätsspulen, die im Frequenzbereich von 2 bis 12 MHz Verwendet werden Die Magnetkerne sind meistens Topfkerne, Torroide, Stäbe oder Perlen.

Oben noch nicht erwähnte Anwendungen sind weiter Magnet kerne für Antennenstäbe, Störunterdrücker und Teilchen beschieuniger. Speicherkerne gehören typisch nicht dazu.

Für Verwendung bei höheren Frequenzen (insbesondere über 1 MHz) wurde wegen seines hohen Widerstandes bisher Ni-Zn-Ferrit als Magnetkernwerkstoff verwendet ($\rho = 10^5 \,\Omega.cm$). (Ein bei Frequenzen über 1 MHz einsetzbarer Werkstoff eignet sich selbstverständlich auch für Verwendung bei Frequenzen unter 1 MHz). Wegen des hohen Preises des Ni-Zn-Ferrits wurde nach einem Ersatzferritsystem mit vergleichbaren elektrischen und magnetischen Eigenschaften gesucht.

Die Erfindung schafft ein derartiges Ferritsystem, das sich durch folgende Zusammensetzung kennzeichnet:

$$(Li_{05}FE_{0,5})_{1-z-a-y}Zn_zCo_aMn_y^{II}MN_x^{III}Fe_{2-x+\delta}O_{4+\frac{3}{2}\delta} + \varepsilon$$

mit

$$0,05 \leqslant z < 0,45$$
$$0 \leqslant a \leqslant 0,05$$
$$0,01 \leqslant x + y \leqslant 0,25$$
$$-0,35 \leqslant \delta \leqslant -0,05$$
$$-0,5\,x \leqslant \varepsilon \leqslant +0,25\,a$$

der weiter zugesetzt wurde

$$p \text{ Gew.-% } Bi_2O_3 + q \text{ Gew.-% } V_2O_5$$

wobei

$$0 \leqslant p \leqslant 1,2$$
$$0 \leqslant q \leqslant 1,2$$
$$0,2 \leqslant p + q \leqslant 1,2$$

Neben einer Kostenersparung von etwa 30 %, die die Verwendung dieses auf Li-Zn-Mn-Ferrit basierenden Ferritsystems in Magnetkernen ergibt, zeigt sich als wesentlicher Vorteil, dass die Sintertemperatur durch den Zusatz einer geringen $Bi_2O_3$- und/oder $V_2O_5$-Menge, die so gering ist, dass die elektrischen und magnetischen Eigenschaften nicht nachteilig beeinflusst werden, wesentlich niedriger als die Sintertemperatur von Ni-Zn-Ferrit sein kann, wodurch im vorliegenden Li-Zn-Mn-Ferritsystem Werkstoffe herstellbar sind, die eine hohe Dichte mit einem kleinen Korn kombinieren, was eine hohe mechanische Festigkeit ergibt. In einem bestimmten Fall wurde eine Bruchfestigkeit gemessen, die fünfmal grösser als die von Ni-Zn-Ferrit mit vergleichbaren elektrischen und magnetischen Eigenschaften war.

Es sei bemerkt, dass LiMnCoZn-Ferriete an sich bekannt sind, z. B. aus Chemical Abstracts 85 136.292j. Es handelt sich in dieser Literaturstelle jedoch um Ferriete für Speicherkerne, die keiner extrem hoher spezifischen elektrischen Widerstand benötigen und nicht im MHz Frequenzbereich getrieben werden. Weiterhin ist die Verwendung von $Bi_2O_3$ und/oder $V_2O_5$ als Sintermittel und der vorteilhafte Unterschuss an Eisen nicht erwähnt.

Aus dem englischen Patentanschrift GB 2 019 828 ist der Zustatz von Bi als ein "doping agent" bekannt. Es handelt sich hier jedoch um LiTiZnMn-Ferriete, für z. B. Yokeringe. In dieser Literaturstelle wird der Zusatz von

$V_2O_5$ nicht beschrieben. Weiter weisen die hier genannten Ferriete ein zu hohem ZN-Gehalt auf.

Die Gesamtmenge des nach der heutigen Erfindung zugesetzten Sinterhilfsmittels ($Bi_2O_3$, $V_2O_5$) darf einerseits nicht höher als 1,2 Gew.-% sein, weil bei grösseren Mengen die magnetischen und elektrischen Eigenschaften nachteilig beeinflusst werden. Zum anderen darf die Gesamtmenge 0,2 Gew.-% nicht Unterschreiten, weil bei geringeren Mengen die Sintertemperatur nicht genügend herabgesetzt wird, wodurch der zu sinternde Werkstoff mit dem Material des Ofens reagieren kann, Li verdampfen kann und die Körner grösser werden, alles auf Kosten der elektrischen, magnetischen und mechanischen Eigenschaften.

Ein anderer Vorteil der niedrigeren Sintertemperatur besteht darin, dass der elektrische Widerstand der vorliegenden Li-Zn-Ferrite höher als der elektrische Widerstand in weiteren Hinsichten vergleichbarer Ni-Zn-Ferrite ist.

Ein geringer, jedoch spezifischer Mn-Gehalt trägt in der Kombination mit $Bi_2O_3$ und $V_2O_5$ als Sinterhilfsmittel wesentlich zum Erhalten eines hohen elektrischen Widerstands und niedriger, mit den Verlusten von Ni-Zn-Ferrit vergleichbarer Verluste bei Abhängig von den Zn-, Fe-, $Bi_2O_3$- und $V_2O_5$-Mengen muss die Mn-Menge im Bereich von 0,01 bis 0,25 Formeleinheiten variieren.

Ein weiterer Vorteil des beschriebenen Li-Zn-Mn-Ferritsystems ist, dass es insbesondere durch Änderung des Li-Zn-Verhältnisses einige Werkstoffe liefert, die verschiedenen Spezifikationen genügen.

Bei einem Zinkgehalt z zwischen 0,35 und 0,45-Formeleinheiten sind Werkstoffe mit einer magnetischen Permeabilität von 250 realisierbar.

Bei einem Zinkgehalt z von 0,25 bis 0,35 Formeleinheiten sind Werkstoffe mit magnetischen Permeabilitäten von 120 realisierbar, die bis zu höheren Frequenzen verwendbar sind.

Bei einem Zinkgehalt z von 0,15 bis 0,25 Formeleinheiten sind Werkstoffe mit magnetischen Permeabilitäten von 60 realisierbar, die bis zu noch höheren Frequenzen verwendbar sind. Der Zusatz von höchstens 0,05 Formeleinheiten Co führt zu Werkstoffen mit niedrigeren Verlusten und weiter kann mit dem Co-Gehalt der Temperaturfaktor der Permeabilität gesteuert werden.

Der Werkstoff in der Reihe, der bis zu den höchsten Frequenzen brauchbar ist, ist durch einen Zn-Gehalt z von 0,10 bis 0,20 Formeleinheiten gekennzeichnet. Bei niedrigeren Zinkgehalten insbesondere unter 0,05 Formeleinheiten sinkt die magnetische Permeabilität zu weit ab. Die Obergrenze des Zn-Gehalts wird durch die gewünschte Curie-Temperatur bestimmt.

Einige Ausführungsbeispiele der Erfindung werden nachstehend an Hand der Zeichnung näher erläutert.

Es zeigen:

Fig. 1 eine graphische Darstellung, die die sog. "Isoverluste" (Linien konstanter Verlustfaktoren) einer Anzahl von Li-Zn-Mn-Ferritkernen mit gleicher Permeabilität, ($\mu$ = 200) jedoch mit verschiedenen Mn- und Zn-Gehalten darstellt. Die Verluste wurden bei 1 MHz gemessen,

Fig. 2 eine gleiche Graphik wie in Fig. 1, jedoch bei 5 MHz gemessen,

Fig. 3 eine gleiche Graphik wie in Fig. 1, jedoch an Kernen mit einer Permeabilität von 250 gemessen,

Fig. 4 eine gleiche graphische Darstellung wie in Fig. 2, jedoch an Kernen mit einer Permeabilität von 250 gemessen,

Fig. 5 eine graphische Darstellung, die die sog. "Isowiderstände" (Linien konstanter Widerstandswerte) einer Anzahl von Li-Zn-Mn-Ferritkernen mit gleicher Permeabilität ($\mu$ = 200), jedoch mit verschiedenen Mn- und Zn-Gehalten darstellt,

Fig. 6 eine gleiche graphische Darstellung wie in Fig. 5, jedoch an Kernen mit einer Permeabilität von 250 gemessen,

Fig. 7 eine graphische Darstellung, die den Verlustfaktor $\frac{tg\delta}{\mu}_{10\,MHz}$ einer Anzahl von Li-Zn-Mn-Co-Ferritkernen abhängig vom Fe-Gehalt darstellt,

Fig. 8 eine graphische Darstellung, die den Verlustaktor $(\frac{tg\delta}{\mu})_{40\,MHz}$ einer Anzahl von Li-Zn-Mn-Co-Ferritkernen abhäbgig vom Fe-Gehalt darstellt,

Fig. 9 eine graphische Darstellung, die den Temperaturkoeffizienten der Permeabilität TF einer Anzahl von Li-Zn-Mn-Co-Ferritkernen mit $\mu_1$ = 60 abhängig vom Co-Gehalt darstellt.

<u>Ausführungsbeispiel I: $Li_{0,30}ZN_{0,40}Mn_{0,08}Fe_{2,02}O_{3,82}$ (mit 0,46 Gew.-% $Bi_2O_3$ und 0,23 Gew.-% $V_2O_5$)</u>

Herstellung: 617 kg $Fe_2O_3$, 26,3 kg $Mn_3O_4$ 121,5 kg ZnO, 1,87 kg $V_2O_5$, 3,77 kg $Bi_2O_3$ und 38,1 kg $Li_2CO_3$ werden abgewogen und vier Stunden mit 600 Liter Wasser in einer. Kugelmühle mit einem Inhalt von 2000 Liter gemahlen. Die Pulver-Wasser-Mischung wird sprühgetrocknet und das erhaltene Granulat in einem Drehrohrofen auf 850°C vorgeheizt. 800 kg des vorgeheizten Granulats werden mit 500 Liter Wasser 6 Stunden in einer 2000 Liter Kugelmühle gemahlen und anschliessend zweimal gespült, jeweils mit 30 Liter Wasser und 4 Liter Dispergator. Der Mischung wird eine Bindmittelmenge zugesetzt, beispielsweise eine Emulsion aus Polymethacrylat in Wasser Die Bindemittelkonzentration beträgt 1 g festes Bindemittel je 100 g trockenes Pulver. Danach wird die Mischung sprühgetrocknet Ringe ($\varnothing_1/\varnothing_a$ = 9/15 mm) werden mit einem Druck von 1,$10^3$ kg/cm² gepresst und anschliessend in einem Ofen 2 Stunden auf einer Spitzentemperatur von 1025°C in Luft gesintert. Die Eigenschaften der gesinterten Ringe sind: spezifische Dichte d = 4,75 g/cm³, magnetische Permeabilität $\mu$ = 243; magnetische Verluste (tg $\delta/\mu$)$_{1\,MHz}$ = 56 x $10^{-6}$ und (tg $\delta/\mu$)$_{5\,MHz}$ = 260 x $10^{-6}$, Temperaturkoeffizient der Permeabilität TF = 17 x $10^{-6}$°C zwischen +25 und +70°C, spezifischer elektrischer Widerstand $\rho$ = 0,8 x $10^6$ $\Omega$.m.

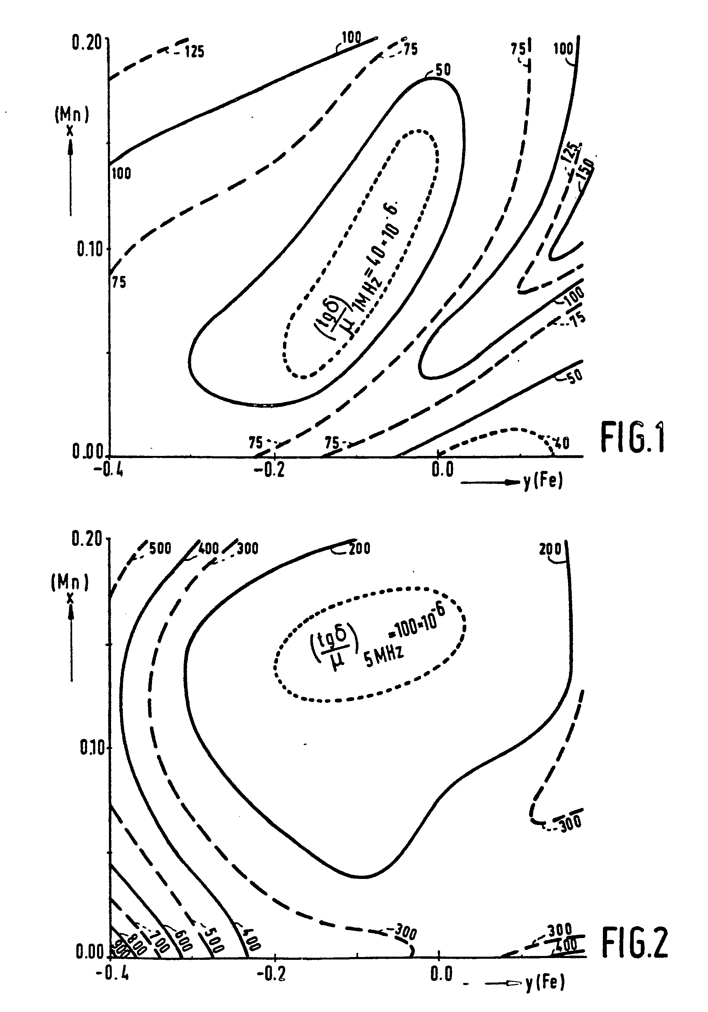

Zwei Reihen einer Anzahl von Magnetkernen mit der Zusammensetzung $Li_{0,30}Zn_{0,40}Mn_xFe_{2,30-x+y}O_{4+\frac{3}{2}y}$ mit anderem Mn- und Fe-Gehalt wurden auf oben beschriebene Weise (also unter Zugabe von 0,46 Gew.-% $Bi_2O_3$ und 0,23 Gew.-% $V_2O_5$) hergestellt. Die Kerne der ersten Serie hatten alle eine Permeabilität $\mu_i$ von 200 (dazu wurden sie auf einer etwa 50°C niedrigeren Temperatur als im Ausführungsbeispiel I gesintert) und die Kerne der zweiten Serie hatten alle eine magnetische Permeabilität $\mu_i$ von 250 (dazu wurden sie auf einer etwa 150°C höheren Temperatur als im Ausführungsbeispiel I gesintert). Von den so hergestellten Kernen wurden die Verlustfaktoren ($\frac{tg\delta}{\mu}$) gemessen. In Fig. 1 (Messungen bei 1 MHz) und Fig. 2 (Messungen bei 5 MHz) sind die Ergebnisse der Messungen an den Kernen der ersten Serie abhängig von den Mn- und Fe-Gehalten verzeichnet. Punkte mit gleichem Wert des Verlustfaktors sind durch Linien miteinander verbunden. Sie geben die sog. Isoverluste an. y = 0 gibt in beiden graphischen Darstellungen den stöchiometrischen Fe-Gehalt an.

Die negativen y-Werte stellen einen Unterschuss an Fe und die positiven y-Werte einen Überschuss an Fe dar. Aus Fig. 1 und 2 zeigt es sich, dass die niedrigsten Verluste bei Kernen mit einem geringen Unterschuss an Fe ge-Funden werden. Abhängig vom Frequenzbereich zeigt es sich, dass der Mn-Gehalt der Kerne etwas niedriger (bei Frequenzen von 1 MHz) oder etwas höher (bei Frequenzen von 5 MHz) zur Verwirklichung minimaler Werte des Verlustfaktors sein soll.

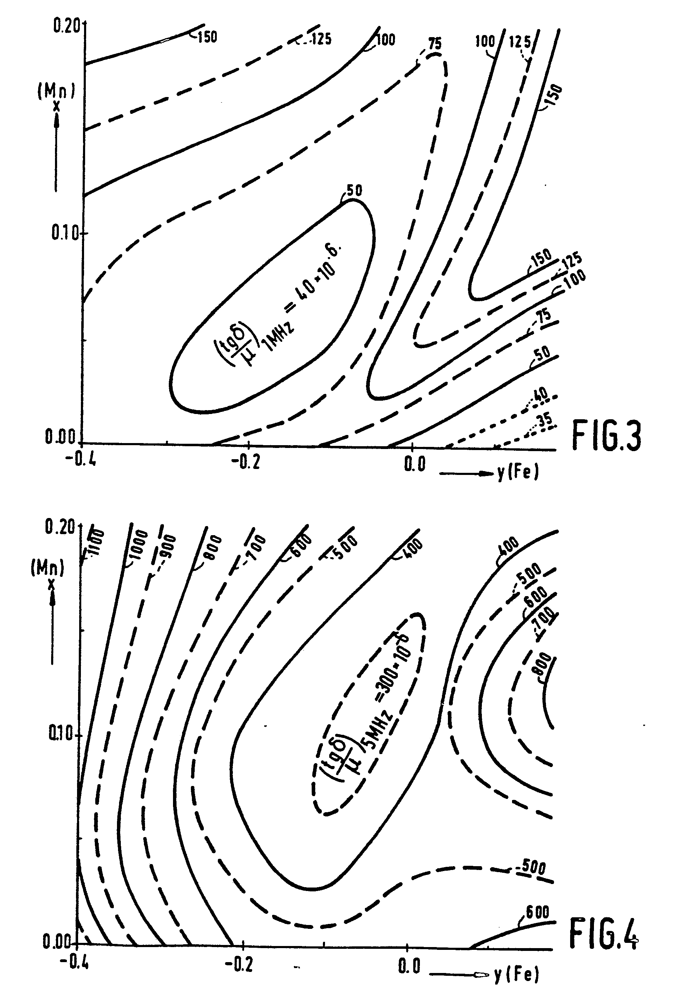

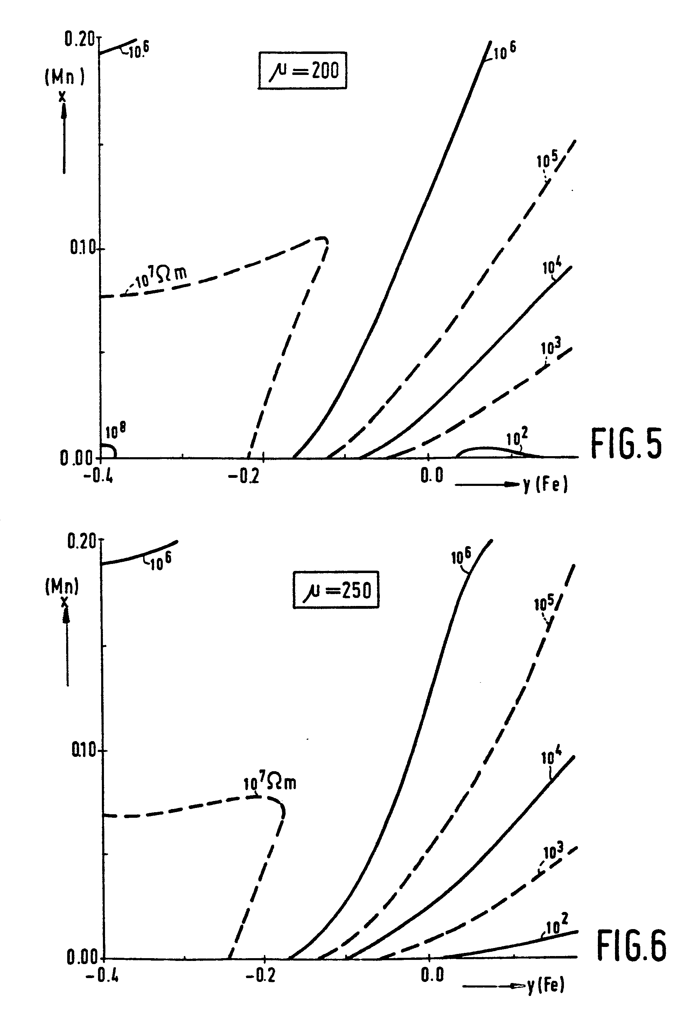

Auf ähnliche Weise sind in Fig. 3 (Messungen bei 1 MHz) und Fig. 4 (Messungen bei 5 MHz) die Ergebnisse der Verlustmessungen an den Kernen der zweiten Serie angegeben.

Auch hier zeigt es sich, dass hinsichtlich der Verluste ein geringer Unterschuss an Fe optimal ist. Bei Frequenzen von 1 MHz wird jedoch gerade jetzt gefunden, dass der Mn-Gehalt vorzugsweise niedrig sein soll, und bei Frequenzen von 5 MHz, dass der Mn-Gehalt etwas höher sein soll, um minimale Werte des Verlustfaktors zu verwirklichen.

In Fig. 5 sind die Ergebnisse von Widerstandsmessungen an den Kernen der ersten Serie und in Fig. 6 die Ergebnisse von Widerstandsmessungen an den Kernen der zweiten Serie dargestellt. In beiden Fällen werden die höchsten Widerstandswerte ($10^7$ Ω.m) bei Kernen mit einem geringen Unterschuss an Fe gefunden.

<u>Ausführungsbeispiel II: $Li_{0,38}Zn_{0,20}Co_{0,03}Mn_{0,04}Fe_{2,16}O_{3,73}$ (mit 0,4 Gew.-% $V_2O_5$ und 0,2 Gew.-% $Bi_2O_3$)</u>

Herstellung: Zunächst Mahlen, Sprühtrocknen und Vorheizen wie bei I), sei es dass die Ausgangsmischung eine etwas abweichende Zusammenstellung aufweist. Danach werden 800 g vorgeheiztes Granulat 6 Stunden mit 600 ml Wasser in einer 2 l Kugelmühle gemahlen, anschliessend wird die Mischung bei 200°C getrocknet und daraus werden Ringe wie bei I gepresst und gesintert. Zum Erhalten eines kleineren Kornes, was niedrigere Verluste ermöglicht, betrug die Sintertemperatur in diesem Fall 965°C. Die Eigenschaften der gesinterten Ringe sind:

$d = 4,53$ g/cm$^3$, $\mu_1 = 60$, $(tg\ \delta/\mu)_{10\ MHz} = 76 \times 10^{-6}$ und

$(tg\ \delta/\mu)_{40\ MHz} = 220 \times 10^{-6}$, $\rho = 0,2 \times 10^6$ Ω.m und

$TF = 20 \times 10^{-6}$

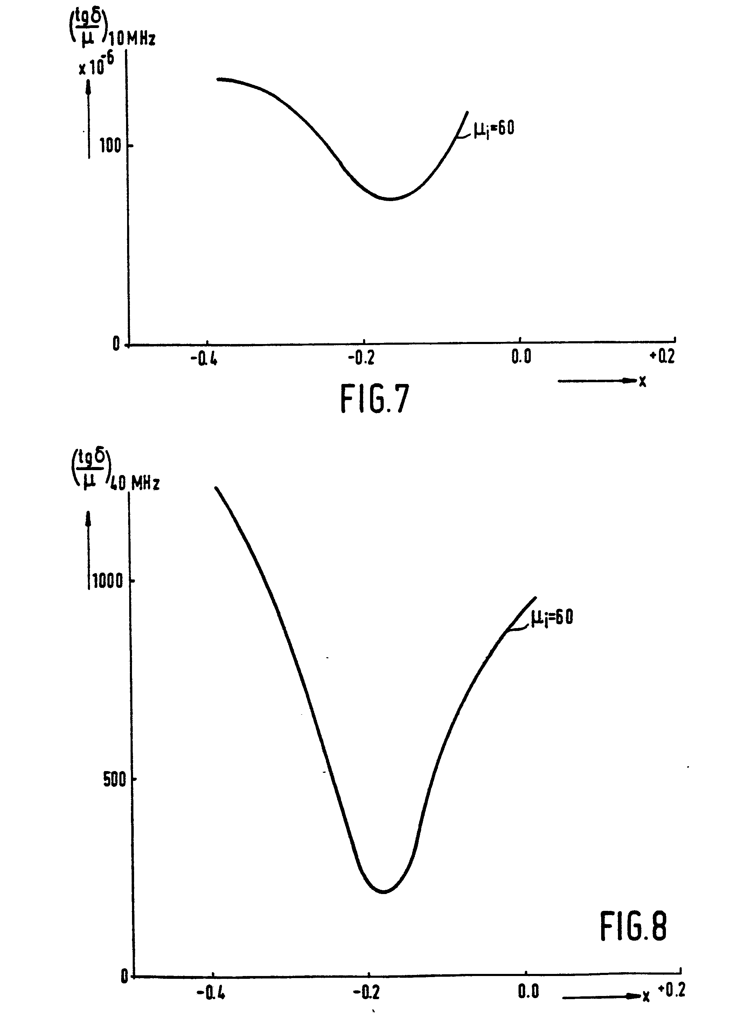

Obige Eigenschaften geben dem betreffenden Werkstoff eine gute Eignung für Verwendung als Magnetkernmaterial in Spulen, die bei höheren Frequenzen betrieben werden. Mindestwerte des Verlustfaktors können durch Einstellung des geeigneten Fe-Gehalts realisiert werden. Dies wird an Hand der Fig. 7 und 8 veranschaulicht. In Fig. 7 sind die Verluste bei 10 MHz einiger Kerne mit der Zusammensetzung $Li_{0,384}Zn_{0,20}Co_{0,03}Mn_{0,04}Fe_{2,344+x}O_{4+\frac{3}{2}x}$ dargestellt, die mit geänderten Fe-Gehalten hergestellt wurden (immer mit einer Zugabe von 0,4 Gew.-% $V_2O_5$ und 0,2 Gew.-% $Bi_2O_3$). Alle Kerne waren derart gesintert, dass sie eine magnetische Permeabilität $\mu = 60$ hatten.

Die niedrigsten Verluste wurden bei Kernen mit einem Unterschuss an Fe gefunden, der etwas kleiner als 0,2 ist.

In Fig. 8 sind die bei 40 MHz bemessenen Verluste dargestellt. Die niedrigsten Verluste wurden bei Kernen mit einem Unterschuss an Fe von etwa 0,2 gefunden.

Die von der Grösse $\delta$ angegebene Abweichung des stöchiometrischen Fe-Gehaltes liegt zwischen - 0,35 und - 0,05 (Unterschuss an Fe).

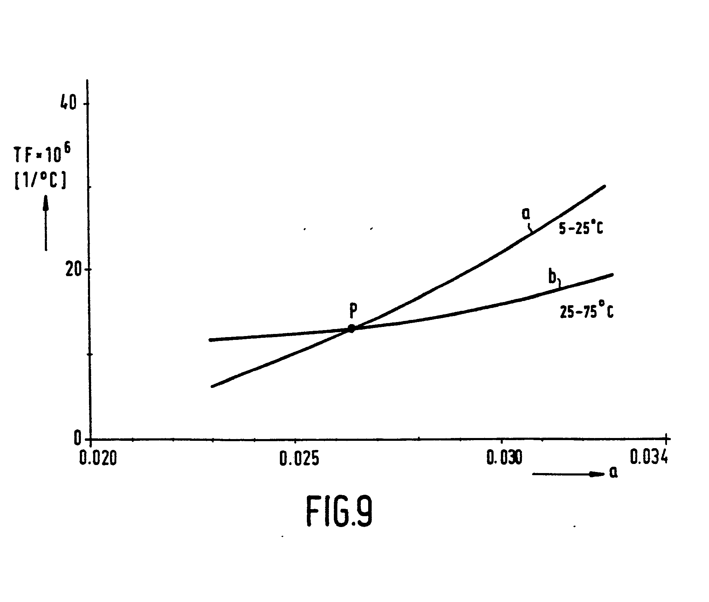

Für einen möglichst konstanten Temperaturkoeffizienten der Permeabilität ist der Co-Gehalt wichtig. Dies wird an Hand der Fig. 9 veranschaulicht. Sie zeigt den Temperaturkoeffizienten TF einiger Kerne mit der Zusammensetzung $Li_{0,384}Zn_{0,23-x}Co_aMn_{0,04}Fe_{2,344+\delta}O_{4+\frac{3}{2}\delta}$, die mit verschiedenen Co-Gehalten hergestellt werden (immer unter Zugabe von 0,4 Gew.-% $V_2O_5$ und 0,2 Gew.-% $Bi_2O_3$. Die Kerne wurden bei derartigen Temperaturen gesintert, dass sie alle eine magnetische Permeabilität $\mu_1 = 60$ hatten. Die Kurve a verbindet Punkte mit einem konstanten Temperaturkoeffizienten im Temperaturbereich von 5 bis 25°C und die Kurve b verbindet Punkte mit einem konstanten Temperaturkoeffizienten im Temperaturbereich von 25 bis 75°C. Bei einem Co-Gehalt a = 0,027 (entsprechend dem Schnittpunkt p der Kurven a und b) wird ein Temperaturkoeffizient realisiert, der zwischen 5 und 75°C konstant ist. Dies gilt für Ferritkerne mit einem gegebenen Fe-Gehalt ($\delta$ = - 0,1). Bei Zusammensetzungen mit einem grösseren Unterschuss an Fe ($\delta \leqslant$ - 0,2) verschiebt sich der Punkt P nach rechts. Der Co-Gehalt für die Verwirklichung eines konstanten TF zwischen 5 und 75°C steigt dabei an. (Der maximal erforderliche Co-Gehalt beträgt etwa 0,05). Bei Vergrösserung des Unterschusses an Fe werden die Kurven a und b etwas niedriger liegen. Der absolute Wert von TF wird also kleiner.

Es sei bemerkt, dass Co in einer oxidierenden Umgebung dreiwertig werden kann. Zum Erhalten eines brauchbaren Materials ist dafür zu sorgen, dass die Sinterung unter derartigen Bedingungen erfolgt, dass höchstens die Hälfte der Co-Ionen dreiwertig wird. Das bedeutet, dass in der Formel, die die Zusammensetzung des Ferritmaterials für Magnetkerne nach der Erfindung beschreibt:

$$(Li_{0,5}Fe_{0,5})_{1-z-a-y}Zn_zCo_aMn_y{}^{II}Mn_x{}^{III}Fe_{2-x-\delta}O_4 + \tfrac{3}{2}\delta + \varepsilon$$

die Obergrenze von $\varepsilon$ gleich $+0,25\,a$ ist.

Die Untergrenze von wird dadurch bestimmt, dass das Mn bei höheren Sintertemperaturen oder in einer weniger oxidierenden Umgebung, völlig zweiwertig sein kann. Unter Berücksichtigung dieses Umstandes ist

$$\varepsilon \geqslant 0,5\,x$$

Versuchsweise wurde festgestellt, dass Werkstoffe mit optimalen Kombinationen von Eigenschaften erhalten werden können, wenn die Zugabe des Sintermittels zwischen 0,3 und 0,7 Gew.-% liegt, während es sich am vorteilhaftesten zeigt, dass sowohl $Bi_2O_3$ als auch $V_2O_5$ zugesetzt werden. Vorteilhafte Ergebnisse werden insbesondere bei der Zugabe von 0,2 Gew.-% $Bi_2O_3$ und 0,4 Gew.-% $V_2O_5$ erhalten. Da jedoch nicht für alle Anwendungen Optimale Kombinationen von Eigenschaften erforderlich sind, kann in bestimmten Fällen auch nur $Bi_2O_3$ oder $V_2O_5$ zum Herabsetzen der Sintertemperatur zugesetzt werden.

## Patentansprüche

1. Magnetkern aus oxidischem Ferromagnetmaterial der aus einem Spinellferrit mit kubischer Kristallstruktur besteht mit einem spezifischen elektrischen Widerstand $\rho$ höher als $10^5$ Ohm.m zur Verwendung im MHz Frequenzbereich, dadurch gekennnzeichnet, dass die Zusammensetzung des Ferrits der folgenden Formel entspricht.

$$(Li_{0,5}Fe_{0,5})_{1-z-a-y}Zn_zCo_aMn_y{}^{II}Mn_x{}^{III}Fe_{2-x+\delta}O_4 + \tfrac{3}{2}\delta + \varepsilon$$

mit

$$0,05 \leqslant z < 0,45$$
$$0 \leqslant a \leqslant 0,05$$
$$0,01 \leqslant x+y \leqslant 0,25$$
$$-0,35 \leqslant \delta \leqslant -0,05$$
$$-0,5x \leqslant \varepsilon \leqslant +0,25a$$

der sugezetzt ist

$p$ Gew.-% $Bi_2O_3$ + $q$ Gew.-% $V_2O_5$ wobei

$$0 \leqslant p \leqslant 1,2$$
$$0 \leqslant q \leqslant 1,2$$
$$0,2 \leqslant p+q \leqslant 1,2$$

2. Magnetkern nach Anspruch 1, dadurch gekennzeichnet, dass $0,3 \leqslant p+q \leqslant 0,7$

3. Magnetkern nach Anspruch 1 oder 2, dadurch gekennzeichnet, dass $p > 0$ und $q > 0$

4. Magnetkern nach Anspruch 1, dadurch gekennzeichnet, dass $0,35 \leqslant z \leqslant 0,45$

5. Magnetkern nach Anspruch 1, dadurch gekennzeichnet, dass $0,25 \leqslant z \leqslant 0,35$ und $a > 0$

6. Magnetkern nach Anspruch 1, dadurch gekennzeichnet, dass $0,15 \leqslant z \leqslant 0,25$ und $a > 0$

7. Magnetkern nach Anspruch 1, dadurch gekennzeichnet, dass $0,10 \leqslant z \leqslant 0,20$ und $a > 0$

8. Verfahren zur Herstellung eines Magnetkerns nach einem der vorangehenden Ansprüche, dadurch gennzeichnet, dass eine homogene Pulvermischung gebildet, zu einem Magnetkern gepresst und durch eine Wärmebehandlung bei einer Temperatur zwischen 950 und 1100°C gesintert wird.

## Claims

1. A magnet core of oxidic, ferromagnetic material, consisting of a spinel ferrite having a cubic crystal structure and an electrical resistivity $\rho$ exceeding $10^5$ Ohm.m for use in the MHz frequency range, characterized in that the composition of the ferrite corresponds to the following formula:

$$(Li_{0.5}Fe_{0.5})_{1-z-a-y}Zn_zCo_aMn_y{}^{II}Mn_x{}^{III}Fe_{2-x+\delta}O_{4+\frac{3}{2}\delta} + \varepsilon$$

with
$$0.05 \leqslant z < 0.45$$
$$0 \leqslant a \leqslant 0.05$$
$$0.01 \leqslant x+y \leqslant 0.25$$
$$-0.35 \leqslant \delta \leqslant -0.05$$
$$-0.5x \leqslant \varepsilon \leqslant +0.25\underline{a}$$

to which has been added
$\underline{p}\%$ by weight of $Bi_2O_3$ + $\underline{q}\%$ by weight of $V_2O_5$ wherein

$$0 \leqslant p \leqslant 1.2$$
$$0 \leqslant q \leqslant 1.2$$
$$0.2 \leqslant p+q \leqslant 1.2$$

2. A magnet core as claimed in claim 1, characterized in that $0.3 \leqslant p+q \leqslant 0.7$

3. A magnet core as claimed in claim 1 or 2, characterized in that $p > 0$ and $q > 0$

4. A magnet core as claimed in claim 1, characterized in that $0.35 \leqslant z \leqslant 0.45$ $a > 0$

5. A magnet core as claimed in claim 1, characterized in that $0.25 \leqslant z \leqslant 0.35$ and $a > 0$

6. A magnet core as claimed in claim 1, characterized in that $0.15 \leqslant z \leqslant 0.25$ and $a > 0$

7. A magnet core as claimed in claim 1, characterized in that $0.10 \leqslant z \leqslant 0.20$ and $a > 0$

8. A method of manufacturing a magnet core as claimed in any one of the preceding claims, characterized in that a homogeneous powder mixture is formed, compressed into a magnet core and sintered by subjecting it to a thermal treatment at a temperature between 950 and 1100°C.

## Revendications

1. Noyau magnétique en matériau ferromagnétique oxydique, qui est constitué par une ferrite de spinelle présentant une structure cristalline cubique, et une résistance électrique spécifique $\rho$ supprieure à $10^5$ Ohms.m pour l'utilisation dans la gamme de fréquences de MHz, caractérisé en ce que la composition de la ferrite satisfait à la formule

$$(Li_{0.5}Fe_{0.5})_{1-z-a-y}Zn_zCo_aMn_y{}^{II}Mn_x{}^{III}Fe_{2-x+\delta}O_{4+\frac{3}{2}\delta} + \varepsilon$$

avec
$$0,05 \leqslant z < 0,45$$
$$0 \leqslant a \leqslant 0,05$$
$$0,01 \leqslant x+y \leqslant 0,25$$
$$-0,35 \leqslant \delta \leqslant -0,05$$
$$-0,5x \leqslant \varepsilon \leqslant +0,25a$$

additionnée de

p % en poids de $Bi_2O_3$ = q % en poids $V_2O_5$ expression dans laquelle

$$0 \leqslant p \leqslant 1,2$$
$$0 \leqslant q \leqslant 1,2$$
$$0,2 \leqslant p+q \leqslant 1,2$$

2. Noyau magnétique selon la revendication 1, caractérisé en ce que $0,3 \leqslant p+q \leqslant 0,7$

3. Noyau magnétiqe selon la revendication 1 ou 2, caractérisé en ce que p > 0 et q > 0

4. Noyau magnétique selon la revendication 1, caractérisé en ce que $0,35 \leqslant z \leqslant 0,45$

5. Noyau magnétique selon la revendication 1, caractérisé en ce que $0,25 \leqslant z \leqslant 0,35$ et a > 0

6. Noyau magnétique selon la revendication 1, caractérisé en ce que $0,15 \leqslant z \leqslant 0,25$ et a > 0

7. Noyau magnétique selon la revendication 1, caractérisé en ce que $0,10 \leqslant z \leqslant 0,20$ et a > 0

8. Procédé pour la revendication d'un noyau magnétique selon l'une des revendications précédentes, caractérisé en ce qu'un mélange homogène pulvérulent est formé et pressé de façon à obtenir un noyau magnétique fritté par traitement thermique à une température comprise entre 950 et 1100°C.

FIG.1

FIG.2

FIG.3

FIG.4

FIG.5

FIG.6

FIG.7

FIG.8

7

FIG.9